(19) Europäisches Patentamt
European Patent Office
Office européen des brevets

(11) **EP 2 388 293 B1**

(12) **EUROPÄISCHE PATENTSCHRIFT**

(45) Veröffentlichungstag und Bekanntmachung des Hinweises auf die Patenterteilung:
**26.12.2012 Patentblatt 2012/52**

(51) Int Cl.:
*C08K 3/22* (2006.01)          *C08K 3/26* (2006.01)
*C08K 7/14* (2006.01)

(21) Anmeldenummer: **10162998.8**

(22) Anmeldetag: **17.05.2010**

(54) **Polyamidformmasse und deren Verwendung zur Herstellung von LED-Gehäusekomponenten**

Polyamide moulding material and its use in producing LED housing components

Masse de formage polyamide et son utilisation pour la fabrication de composants de boîtier à DEL

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**23.11.2011 Patentblatt 2011/47**

(73) Patentinhaber: **EMS-PATENT AG**
**7013 Domat / Ems (CH)**

(72) Erfinder:
• **Lamberts, Nikolai**
**7402 Bonaduz (CH)**

• **Bayer, Andreas**
**7013 Domat/ Ems (CH)**
• **Hewel, Manfred, Dr.**
**7013 Domat/ Ems (CH)**
• **Hoff, Heinz**
**7015 Tamins (CH)**

(74) Vertreter: **Bremi, Tobias Hans**
**Isler & Pedrazzini AG**
**Postfach 1772**
**8027 Zürich (CH)**

(56) Entgegenhaltungen:
**EP-A1- 0 416 436          EP-A1- 1 882 719**
**WO-A1-2006/135841**

**Beschreibung**

TECHNISCHES GEBIET

Die vorliegende Erfindung betrifft Polyamidformmassen sowie daraus hergestellte LED-Gehäusekomponenten, wobei sich die Formmassen im wesentlichen aus hochschmelzenden Polyamiden, Weisspigment, Calciumcarbonat und Glasfasern zusammensetzen. Die auf Basis der vorgeschlagenen Polyamidformmasse hergestellten LED-Komponenten zeichnen sich durch eine sehr gute Langzeitreflektivität und gute mechanische Eigenschaften aus.

STAND DER TECHNIK

Licht emittierende Halbleiterdioden (LED) werden aufgrund ihrer zahlreichen Vorteile gegenüber traditionellen Glühlampen in steigendem Masse als Lichtquellen für zahlreiche Anwendungen verwendet. LED's sind wesentlich sparsamer als übliche Leuchtquellen, erfordern Niedervoltstromquellen, sind nicht schlagempfindlich, brauchen praktisch keinen Unterhalt, und generieren wenig Abwärme im Betrieb. Aufgrund dieser Vorteile ersetzen sie mehr und mehr übliche Glühlampen und finden Anwendung in Lichtsignalen, Displays (Automobil, Mobiltelefon, Video, Leuchtanzeigen), bei der Innen- und Aussenbeleuchtung und bei Blitzlichtern.

Die LED selbst stellt in solchen Anordnungen typischerweise nur eine Komponente eines aus mehreren Teilen zusammengesetzten Bauteils dar. Eine LED-Anordnung setzt sich aus mindestens einer Halbleiterdiode, einem Gehäuse, welches eine oder mehrere LED aufnimmt und zu mindestens teilweise umgibt sowie einer elektrischen Verbindung zwischen Diode und dem Anschlusselement zusammen. Die Bauteilanordnung enthält üblicherweise noch eine Linse, welche am Gehäuse befestigt ist und die LED teilweise oder ganz bedeckt und der Fokussierung des von der LED ausgesandten Lichtes dient.

Die Fertigung von LED-Gehäusen mittels Spritzguss polymerer Werkstoffe ermöglicht eine beträchtliche Design-Freiheit und trägt zur kosteneffizienten Produktion bei. Die verwendeten Kunststoffe müssen aber eine Reihe von Eigenschaften erfüllen, um dieser Anwendung gerecht zu werden. LEDs werden in der Regel mittels des sogenannten Reflow-Prozesses (SMT) bei Temperaturen von ca. 260°C auf die Leiterplatten gelötet. Die eingesetzten Kunststoffe sollten daher eine ausreichende Hitzebeständigkeit aufweisen und das Reflow-Löten ohne Blistering (oberflächliche Blasenbildung) überstehen. Des weiteren sollen die LED-Gehäuse einen möglichst hohen Weissgrad und eine gute Reflektivität aufweisen, um die maximale Lichtmenge reflektieren zu können, und dies über eine möglichst lange Betriebsdauer. Dies erfordert von den Polymerzusammensetzungen eine hohe UV-Lichtbeständigkeit und Hitzebeständigkeit und eine gute Langzeitbeständigkeit unter Betriebsbedingungen.

Die WO-A-2006/135841 beschreibt Gehäuse für eine LED-Anordnung, umfassend eine Hochtemperatur-Polyamidzusammensetzung und ein Weisspigment (Titandioxid), wobei das zugrundeliegende Polyamid einen Schmelzpunkt von grösser 270°C aufweist und neben Terephthalsäure ein aliphatisches Diamin mit 10 - 20 C-Atomen enthält. Gegebenenfalls können die Formmassen noch weitere Füllstoffe enthalten. Im einzigen Beispiel werden Glasfasern eingesetzt. Der Glasfaserzusatz verbessert zwar die mechanischen Eigenschaften, verschlechtert aber die Langzeitreflektivität dramatisch. So offenbart WO-A-2006/135841 auch nur den Weissgrad (whiteness index) nach kurzzeitiger (2h) Hitzelagerung bei unterschiedlichen Temperaturen.

JP-A-2007-271834 betrifft einen LED-Reflektor, hergestellt aus einer hochschmelzenden Polyamidformmasse bestehend aus Polyphthalamid, anorganischem Füllstoff, Weisspigment und einem Epoxidharz. In der Beschreibung wird insbesondere die gute Haftung zu Epoxiden herausgestellt. Bezüglich der Reflektivität wird allerdings nur das Kurzzeitverhalten (nach 2h bei 170°C bzw. 10 sec bei 260°C) untersucht. Im einzigen Beispiel wird ein PA 6T/66 mit 20 % Glasfasern, 10 % Titandioxid und 3.5 - 10 % Epoxidharz beschrieben. Solche Zusammensetzungen haben eine schlechte Langzeitreflektivität.

EP-A-1 693 418 beschreibt eine Polyamidzusammensetzung für die Herstellung von LED-Reflektoren, enthaltend Polyphthalamide und Weisspigment, welche bei einer Temperatur von 130 °C einen Elastizitätsmodul im Bereich von 4500 und 12000 MPa aufweist. In den Beispielen werden ausschliesslich glasfaserverstärkte und mit Titandioxid eingefärbte Formmassen auf Basis von PA 6T/66 gearbeitet. Der Glasfaser-Gehalt beträgt 22 bis 30 Gew.-%. Die Reflektivität wird nach 48h Bestrahlung mit einer Halogenlampe bei Raumtemperatur bestimmt. Diese Anordnung entspricht aber nicht annähernd den Betriebsbedingungen, bei denen eine Kombination von Wärme- und Lichteinwirkung, wie sie im Betrieb einer LED charakteristisch ist, zum Tragen kommt. Auch diese Formmassen weisen eine ungenügende Langzeitreflektivität auf.

JP-A-03-88846 beschreibt glasfaserverstärkte Polyphthalamid-Formmassen für die Herstellung von Gehäusen elektronischer Bauteile, die dem Infrarot-Reflow-Löten standhalten.

In EP-A-1 466 944 werden Formmassen auf Basis von teilaromatischen Polyamiden und Kaliumtitanat bzw. Wollastonite für die Herstellung von LED-Reflektoren beschrieben. Zur Verbesserung der Reflektivität wurde in einigen Beispielen zusätzlich Titandioxid eingesetzt. In den Vergleichsbeispielen werden die erfindungsgemässen Titanate vollständig durch Glasfasern ersetzt, was die Reflektivität nach Hitzelagerung (180°C, 2h) deutlich verschlechtert. In den Beispielen gearbeitet wurden die teilaromatischen Polyamide PA 6T/66 und PA 6T/DT.

DARSTELLUNG DER ERFINDUNG

Der Erfindung liegt demnach die Aufgabe zugrunde, Formmassen auf Basis von teilaromatischen Polyamiden bereit zu stellen, die zur Herstellung von weissen Gehäuseteilen für lichtemittierende Dioden (LED) geeignet sind. Die Formmassen sollen sich durch hohe Langzeitreflektivität, geringe Blistemeigung und gute mechanische Eigenschaften, geringen Verzug, und eine verbesserte Verarbeitbarkeit, insbesondere im Spritzguss, auszeichnen. Eine hohe mechanische Belastbarkeit wird gefordert, um ein Reissen der LED-Gehäuse im Betrieb oder bei drastischen Temperaturschwankungen zu vermeiden. Langzeitreflektivität bedeutet hierbei, dass ein hohes Mass an Reflektivität unter LED-Betriebsbedingungen, d.h. unter Temperatur- (120°C) und Lichteinwirkung (LED mit $\lambda_{max}$ = 440 nm), für einen möglichst langen Zeitraum beibehalten wird.

Diese Aufgabe wird erfindungsgemäß gelöst durch die Polyamidformmassen gemäß Anspruch 1.

Spezifisch betrifft die vorliegende Erfindung eine Polyamidformmasse auf Basis von teilkristallinen Polyamiden insbesondere zur Herstellung von LED-Gehäusen oder Gehäusekomponenten mit hoher Festigkeit, hoher Langzeitreflektivität und geringer Blistemeigung. Die erfindungsgemäßen Polyamidformmasse, besteht dabei aus den folgenden Komponenten (A)-(D) in den angegebenen Gewichtsverhältnissen:

(A) 40 bis 80 Gew.-% mindestens eines teilaromatischen Polyamids auf Basis von wenigstens 70 Mol-% aromatischen Dicarbonsäuren und wenigstens 70 Mol-% aliphatischen Diaminen mit 4 bis 18 Kohlenstoffatomen und mit einer Schmelztemperatur ($T_m$) im Bereich von 270°C bis 340°C.
(B) 10 bis 30 Gew.-% Titandioxid
(C) 5 bis 20 Gew.-% Glasfasern
(D) 5 - 30 Gew.-% Calciumcarbonat.

Dabei ergeben die Gewichtsprozente der Komponenten (A) bis (D) zusammen 100%. Zudem gilt das obige mit der Massgabe, dass die Komponenten (B), (C) und (D) die folgenden Bedingungen erfüllen:

$$(B) + (C) + (D) = 20 \text{ bis } 60 \text{ Gew.-\%,}$$

Gewichtsverhältnis (C)/(D) im Bereich von 0.25 bis 1.5.

Polyamidformmasse kann dabei gegebenenfalls zusätzlich zu den Komponenten (A) bis (D) übliche Zusatzstoffe (E) enthalten, und wobei deren Menge additiv zur Summe der Komponenten (A) bis (D) ist.

Beim Calciumcarbonat kann es sich dabei um natürliches Calciumcarbonat oder um gefälltes Calciumcarbonat handeln. Es kann sich dabei auch um oberflächenbehandelte Formen handeln. Insbesondere kann es sich nach DIN EN ISO 3262-4 bis -6: 1998-09 um Kreide (Typ KA mit einem $CaCO_3$-Gehalt von mindestens 96%, Typ KB mit mindestens 90%), Calcit (Typ C mit einem $CaCO_3$-Gehalt von mindestens 98%) und gefälltes Calciumcarbonat (Typ CCP mit einem $CaCO_3$-Gehalt von mindestens 98%) handeln. Derartige Produkte können zusätzlich noch Additive einer Oberflächenbehandlung (z.B. Stearinsäure) enthalten.

Versuche mit weissen LED-Gehäusen haben gezeigt, dass Polyamidformmassen gefüllt mit Calciumcarbonat und Titandioxid Produkten mit guter und konstanter Langzeitreflektivität ergeben. Nachteilig ist allerdings, dass diese rein mineralgefüllten Produkte vergleichsweise spröde Formmassen ergeben, die sich nur schwierig verarbeiten lassen. Zudem ist die mechanische Belastbarkeit nicht ausreichend, so dass die LED-Gehäuse im Betrieb oder bei starken Temperaturschwankungen (Temperaturschock) reissen.

Die mechanischen Eigenschaften von Polyamidformmassen auf Basis von aromatischen Polyamiden, insbesondere von Polyphthalamiden und Titandioxid lassen sich durch Verstärkung mit Glasfasern verbessern. Allerdings weisen die aus diesen glasfaserverstärkten Polyamid-Zusammensetzungen hergestellten LED-Gehäuse eine deutlich schlechtere Langzeitreflektivität auf.

Überraschend hat sich nun gezeigt, dass Zusammensetzungen aus Polyphthalamiden und Titandioxid in Kombination mit Calciumcarbonat und Glasfasern zu einer mit den rein mineralgefüllten Zusammensetzungen vergleichbaren Langzeitreflektivität führen kann, wenn das Gewichtsverhältnis von Glasfasern zu Calciumcarbonat in einem spezifischen Bereich gewählt wird, namentlich im Bereich von 0.25 bis 1.5. Die mechanische Belastbarkeit dieser Materialien ist dann ausreichend, um ein Reissen der LED-Gehäuse im Betrieb zu vermeiden.

Messung der Langzeitreflektivität:

Eine wichtige Eigenschaft der LED-Gehäuse ist eine gute Langzeitreflektivität, d.h. ein hoher Reflektivitätsgrad muss unter Betriebsbedingungen über einen möglichst grossen Zeitraum aufrechterhalten werden, um eine hohe Leuchtstärke der LED auch langfristig zu gewährleisten.

Die Bestrahlung von Probenkörpern (Farbplättchen) mit einer LED (15 Watt, $\lambda_{max}$ = 440 nm) bei Raumtemperatur ergibt auch nach 14 Tagen noch keine sichtbare Veränderung bzw. Schädigung des Materials. D.h. die reine Bestrahlung eignet sich nicht, um einen forcierten Belastungstest der LED-Gehäusematerialien im Hinblick auf die Werkstoffauswahl durchzuführen. Erst die gleichzeitige Wärmeeinwirkung und Bestrahlung bewirkt eine oberflächliche Veränderung am Ort der Bestrahlung und damit eine Reduktion des Reflektivitätsgrades.

Daher wird die Änderung der Reflektivität der gefertigten Probekörper im nachfolgend beschriebenen Belastungstest bestimmt. Die auf einem Flachbettwärmetisch liegenden Farbblättchen (30 x 30 x 2 mm) werden von unten ganzflächig auf 120°C erwärmt und von oben mittig durch eine LED (15 Watt, $\lambda_{max}$ = 440 nm) über ein fokussierendes Linsensystem (Durchmesser des Kernfokus 4 mm, Durchmesser des Streulichtkreises: 20 mm) bestrahlt. Die Reflektivität wird nach 0h und nach 24h bei einer Wellenlänge von 420 und 440 nm bestimmt. In den unten stehenden Tabellen 1 und 2 ist zusätzlich die Differenz dieser beiden Wert als "Δ Reflektivität" aufgeführt.

Die Reflektivität wird nach DIN 6174 an Farbplättchen der Dimension 30 x 30 x 2 mm bei einer Temperatur von 23 °C mit einem Farbmessgerät Datacolor SF600+ mit einer Blende von 30 mm gemessen.

In einer bevorzugten Ausführungsform der Polyamidformmasse gemäß Erfindung sinkt die Reflektivität der Probekörper bei einem Ausgangswert (Testdauer:0h) von mindestens 85% bemessen bei 420 nm um nicht mehr als 25% (Δ Reflektivität), besonders bevorzugt um nicht mehr als 20% ab, wenn die Proben wie oben beschrieben dem Belastungstest 24h ausgesetzt werden.

Teilaromatisches Polyamid (Komponente (A))

Die erfindungsgemässe LED-Gehäuse werden hergestellt aus Polyamidformmassen, bestehend aus mindestens einem hochschmelzenden Polyamid (bevorzugtennassen Polyphthalamid), Titandioxid, Glasfasern, Calciumcarbonat und sowie Stabilisatoren und weiteren Additiven.

Gemäß einer bevorzugten Ausführungsform wird dabei das teilaromatische Polyamid der Komponente (A) auf Basis von wenigstens 80 Mol-% aromatischen Dicarbonsäuren und wenigstens 80 Mol-% aliphatischen Diaminen mit 4 bis 18 Kohlenstoffatomen, vorzugsweise mit 6-12 Kohlenstoffatomen, gebildet.

Eine weitere bevorzugte Ausführungsform ist dadurch gekennzeichnet, dass das teilaromatische Polyamid der Komponente (A) hinsichtlich Dicarbonsäuren im wesentlichen ausschließlich auf Basis von aromatischen Dicarbonsäuren gebildet ist. Zudem ist bevorzugt, dass die genannten aromatischen Dicarbonsäuren des teilaromatischen Polyamids der Komponente (A) ausgewählt sind aus der Gruppe: Terephthalsäure, Isophthalsäure, sowie Mischungen davon.

Gemäß einer weiteren bevorzugten Ausführungsform sind die genannten aliphatischen Diamine des teilaromatischen Polyamids der Komponente (A) ausgewählt aus der Gruppe: Hexandiamin, Decandiamin sowie Mischungen davon.

Die erfindungsgemäß eingesetzte Matrix der Polyamidformmassen basiert auf mindestens einem hochschmelzenden Polyamid (Komponente (A)), welches einen Schmelzpunkt im Bereich von 270°C bis 340°C aufweist.

Die bevorzugt eingesetzten Polyphthalamide sind Polyamide auf Basis von Terephthalsäure und aliphatischen Diaminen und gegebenenfalls weiteren aliphatischen, cycloaliphatischen und aromatischen Dicarbonsäuren sowie Lactamen und/oder Aminocarbonsäuren.

Das hochschmelzende Polyamid (Komponente (A)) hat bevorzugtermassen eine Lösungsviskosität, gemessen in m-Kresol (0,5 Gew.-%, 20°C) von $\eta_{rel}$ kleiner 2,6, bevorzugt von $\eta_{rel}$ kleiner 2,3, insbesondere von $\eta_{rel}$ kleiner 2,0 und von $\eta_{rel}$ wenigstens 1,4, bevorzugt von $\eta_{rel}$ wenigstens 1,5, insbesondere von $\eta_{rel}$ wenigstens 1,55. Bevorzugt liegt die Lösungsviskosität $\eta_{rel}$ im Bereich von 1.5 bis 2.0, besonders bevorzugt im Bereich von 1.55 bis 1.75.

In Frage kommt als hochschmelzendes teilaromatisches Polyamid ein Polyamid auf Basis von aromatischen Dicarbonsäuren und aliphatischen Diaminen. Ein Teil der aromatischen Dicarbonsäuren kann durch aliphatische und/oder cycloaliphatische Dicarbonsäuren, ein Teil der aliphatischen Diamine kann durch cycloaliphatische und/oder araliphatische Diamine ersetzt werden. Ein teilweiser Ersatz der Dicarbonsäuren und der Diamine kann auch durch Lactame und/oder Aminocarbonsäuren erfolgen.

Somit werden die hochschmelzenden Polyamide aus folgenden Komponenten gebildet:

(A1) Dicarbonsäuren:

70 - 100 Mol-% aromatische Dicarbonsäuren, bevorzugtermassen Terephthalsäure und/oder Isophthalsäure, bezogen auf den Gesamtgehalt an anwesenden Säuren,

0 - 30 Mol-% einer aliphatischen Dicarbonsäure bevorzugtermassen mit 6 bis 18 Kohlenstoffatomen, und/oder einer cycloaliphatischen Dicarbonsäure mit bevorzugtermassen 8 bis 20 Kohlenstoffatomen,

(A2) Diamine:

70 - 100 Mol-% mindestens eines aliphatischen Diamins mit 4-18 Kohlenstoffatomen, vorzugsweise mit 4 bis 12 Kohlenstoffatomen, bezogen auf den Gesamtgehalt an anwesenden Diaminen,
0 - 30 Mol-% cycloaliphatische Diamine, vorzugsweise mit 6 bis 20 Kohlenstoffatomen, und/oder araliphatische Diamine, wie z.B. MXDA und PXDA,
wobei in den hochschmelzenden Polyamiden der prozentuale Molgehalt an Dicarbonsäuren 100% und der prozentuale Molgehalt an Diaminen 100% ausmacht,
und/gegebenenfalls aus:

(A3) Aminocarbonsäuren und/oder Lactamen, enthaltend

0 - 100 Mol-% Lactame mit bevorzugtermassen 6 bis 12 Kohlenstoffatomen, und/oder
0 - 100 Mol-% Aminocarbonsäuren mit bevorzugtermassen 6 bis 12 Kohlenstoffatomen.

Während die Komponenten (A1) und (A2) weitgehend äquimolar eingesetzt werden, beträgt die Konzentration von (A3) höchstens 40 Gew.-%, bevorzugt höchstens 30 Gew.-%, insbesondere höchstens 20 Gew.-% bezogen auf die Summe von (A1) bis (A3).

Zusätzlich zu den weitgehend äquimolar eingesetzten Komponenten A1 und A2 können Dicarbonsäuren (A1) oder Diamine (A2) zur Regelung der Molmasse oder zum Ausgleich von Monomerverluste bei der Polyamidherstellung eingesetzt werden, sodass in ihrer Gesamtheit die Konzentration einer Komponente A1 oder A2 überwiegen kann. Geeignete aliphatische Dicarbonsäuren der Komponente A1 sind Adipinsäure, Korksäure, Azelainsäure, Sebazinsäure, Undecandisäure, Dodecandisäure, Brassylsäure, Tetradecandisäure, Pentadecandisäure, Hexadecandisäure und Octadecandisäure. Geeignete cycloaliphatische Dicarbonsäuren sind die cis- und/oder trans-Cyclohexan-1,4-dicarbonsäure und/oder cis- und/oder trans-Cyolohexan-1,3-dicarbonsäure (CHDA).

Die als Komponente (A2) zu 70 - 100 Mol-% eingesetzten Diamine sind vorzugsweise ausgewählt aus der Gruppe 1,4-Butandiamin, 1,5-Pentandiamin, 1,6-Hexandiamin, 2-Methyl-1,5-pentandiamin (MPD), 1,7-Heptandiamin, 1.8-Octandiamin, 1,9-Nonandiamin, 2-Methyl-1,8-octandiamin, 2,2,4-Trimethylhexamethylendiamin, 2,4,4-Trimethylhexamethylendiamin, 5-Methyl-1,9-nonandiamin, 1,10-Decandiamin, 1,11-Undecandiamin, 2-Butyl-2-ethyl-1,5-pentandiamin, 1,12-Dodecandiamin, 1,13-Tridecandiamin, 1,14-Tetradecandiamin, 1,16-Hexadecandiamin, 1,18-Octadecandiamin. Hiervon bevorzugt sind die Diamine 1,6-Hexandiamin, 2-Methyl-1,5-pentandiamin, 1,9-Nonandiamin, 2-Methyl-1,8-octandiamin, 1,10-Decandiamin und 1,12-Dodecandiamin, insbesondere 1,6-Hexandiamin und 1,10-Decandiamin, respektive Mischungen davon. Die oben genannten, obligatorisch eingesetzten aliphatischen Diamine können in untergeordneter Menge von nicht mehr als 30 Mol-%, von vorzugsweise nicht mehr als 20 Mol-% und insbesondere nicht mehr als 10 Mol-% (bezogen auf die Gesamtmenge der Diamine) durch andere Diamine ersetzt werden. Als cycloaliphatische Diamine können beispielsweise Cyclohexandiamin, 1,3-Bis-(Aminomethyl)-cyclohexan (BAC), Isophorondiamin, Norbornandimethylamin, 4,4'-Diaminodicyclohexylmethan (PACM), 2,2-(4,4'-Diaminodicyclohexyl)propan (PACP) und 3,3'-Dimethyl-4,4'-diaminodicyclohexylmethan (MACM) verwendet werden. Als araliphatisches Diamine seien m-Xylylendiamin (MXDA) und p-Xylylendiamin (PXDA) erwähnt.

Zusätzlich zu den beschriebenen Dicarbonsäuren und Diaminen können noch Lactame und/oder Aminocarbonsäuren als polyamidbildende Komponenten (Komponente (A3)) eingesetzt werden. Geeignete Verbindungen sind beispielsweise Caprolactam (CL), $\alpha,\omega$-Aminocapronsäure, $\alpha,\omega$-Aminononansäure, $\alpha,\omega$-Aminoundecansäure (AUA), Laurinlactam (LL) und $\alpha,\omega$-Aminododecansäure (ADA). Die Konzentration der zusammen mit den Komponenten A1 und A2 eingesetzten Aminocarbonsäuren und/oder Lactame beträgt höchstens 40 Gew.-%, bevorzugt höchstens 30 Gew.-% und besonders bevorzugt höchstens 20 Gew.-% bezogen auf die Summe der Komponenten A1 und A2. Speziell bevorzugte Lactame sind Lactame bzw. $\alpha,\omega$-Aminosäuren mit 4, 6, 7, 8, 11 oder 12 C-Atomen. Dies sind die Lactame Pyrrolidin-2-on (4 C-Atome), $\varepsilon$-Caprolactam (6 C-Atome), Önanthlactam (7 C-Atome), Capryllactam (8 C-Atome), Laurinlactam (12 C-Atome) bzw. die $\alpha,\omega$-Aminosäuren 1,4-Aminobutansäure, 1,6-Aminohexansäure, 1,7-Aminoheptansäure, 1,8-Aminooctansäure, 1,11-Aminoundecansäure und 1,12-Aminododecansäure.

Weil Diamine flüchtigere Verbindungen als Dicarbonsäuren sind, entsteht beim Herstellprozess häufig ein Diaminverlust. Beim Verdampfen des Wassers, beim Austrag des Vorkondensats und bei der Nachkondensation in der Schmelze oder in der Festphase geht Diamin mit anderen Worten verloren. Zum Ausgleich des Diaminverlustes wird deshalb bevorzugt dem Monomeransatz ein Diaminüberschuß von 1 bis 8 Gew.-% bezogen auf die Gesamtmenge der Diamine zugesetzt. Mit dem Diaminüberschuß wird auch das Molekulargewicht und die Verteilung der Endgruppen geregelt.

Zur Reglung der Molmasse, der relativen Viskosität bzw. der Fliessfähigkeit oder des MVR können dem Ansatz und/oder dem Vorkondensat (vor der Nachkondensation) Regler in Form von Monocarbonsäuren oder Monoaminen zugesetzt werden. Als Regler geeignete, aliphatische, cycloaliphatische oder aromatische Monocarbonsäuren oder Monoamine sind Essigsäure, Propionsäure, Buttersäure, Valeriansäure, Capronsäure, Laurinsäure, Stearinsäure, 2-Ethylhexansäure, Cyclohexansäure, Benzoesäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, u.a. Die Regler können einzeln oder in Kombination benutzt werden. Es können auch andere monofunktionelle Verbindungen als Regler eingesetzt werden, die mit einer Amino- oder Säuregruppe reagieren können wie Anhydride, Isocyanate, Säurehalogenide oder Ester. Die übliche Einsatzmenge der Regler liegt zwischen 10 und 200 mmol pro kg Polymer.

Die teilaromatischen Copolyamide (A) können mit an sich bekannten Verfahren hergestellt werden. Geeignete Verfahren sind an verschiedener Stelle beschrieben worden, und in der Folge sollen einige der möglichen in der Patentliteratur diskutierten Verfahren angegeben werden, der Offenbarungsgehalt der nachfolgend genannten Dokumente wird hinsichtlich des Verfahrens zur Herstellung des Copolyamids der Komponente (A) der vorliegenden Erfindung ausdrücklich in den Offenbarungsgehalt der vorliegenden Anmeldung eingeschlossen: DE-A-195 13 940, EP-A-0 976 774, EP-A-0 129 195, EP-A-0 129 196, EP-A-0 299 444, US 4,831,106, US 4,607,073, DE-A-14 95 393 und US 3,454,536.

Am gebräuchlichsten, und zur Herstellung der Komponente (A) geeignet, ist die zweistufige Herstellung zuerst eines tiefviskosen, niedermolekularen Vorkondensats und anschließender Nachkondensation in der Festphase oder der Schmelze (z.B. im Extruder). Es ist auch ein dreistufiges Verfahren aus 1. Vorkondensation, 2. Festphasenpolymerisation und 3. Schmelzepolymerisation möglich, wie es in DE-A-696 30 260 angegeben ist. Dass in diesem Dokument beschriebene Verfahren wird ausdrücklich in den Offenbarungsgehalt der vorliegenden Anmeldung eingeschlossen.

Für Produkte mit Schmelzpunkten unter 300°C eignet sich auch das beispielsweise in US 3,843,611 und US 3,839,296 beschriebene einstufige Batchverfahren, bei dem die Mischung der Monomeren oder deren Salze für 1 bis 16 Stunden auf Temperaturen von 250 bis 320°C aufgeheizt werden und der Druck von einem Maximum unter Abdampfen von gasförmigen Material gegebenenfalls mit Hilfe eines Inertgases auf den niedrigsten Druck von bis zu 1 mm Hg reduziert wird.

Konkrete Vertreter für die erfindungsgemäßen Polyamide sind: PA 4T/4I, PA 4T/6I, PA 5T/5I, PA 6T/6, PA 6T/6I, PA 6T/10T, PA 6T/10I, PA 9T, PA 10T, PA 12T, PA 10T/10I, PA10T/12, PA10T/11, PA 6T/9T, PA 6T/12T, PA 6T/10T/6I, PA 6T/6I/6, PA 6T/6I/12 sowie Mischungen davon, insbesondere vorzugsweise ist das teilaromatische Polyamid der Komponente (A) ausgewählt aus der Gruppe: PA 6T/6I, PA 6T/10T, PA 6T/10T/6I, sowie Mischungen davon.

Erfindungsgemäß sind als hochschmelzende Polyamide (A), insbesondere folgende teilaromatische Copolyamide bevorzugt:

- teilkristallines Polyamid 6T/6I mit 50 bis 80 Mol-% Hexamethylenterephthalamid-Einheiten und 20 bis 50 Mol-% Hexamethylenisophthalamid-Einheiten;
- teilkristallines Polyamid 6T/6I mit 55 bis 75 Mol-% Hexamethylenterephthalamid-Einheiten und 25 bis 45 Mol-% Hexamethylenisophthalamid-Einheiten;
- teilkristallines Polyamid 6T/6I mit 62 bis 73 Mol-% Hexamethylenterephthalamid-Einheiten und 25 bis 38 Mol-% Hexamethylenisophthalamid-Einheiten;
- teilkristallines Polyamid 6T/6I mit 70 Mol-% Hexamethylenterephthalamid-Einheiten und 30 Mol-% Hexamethylenisophthalamid-Einheiten;
- teilkristallines Polyamid, hergestellt aus mindestens 50 Mol-% Terephthalsäure und höchstens 50 Mol-% Isophthalsäure sowie einer Mischung aus mindestens zwei Diaminen, ausgewählt aus der Gruppe Hexamethylendiamin, Nonandiamin, Methyloctandiamin, und Decandiamin;
- teilkristallines Polyamid, hergestellt aus mindestens 70 Mol-% Terephthalsäure und höchstens 50 Mol-% Isophthalsäure sowie einer Mischung aus Hexamethylendiamin und Dodecandiamin;
- teilkristallines Polyamid 6T/10T mit 10 bis 60 Mol-% Hexamethylenterephthalamid-(6T)- und 40 bis 90 Mol-% Decamethylenterephthalamid-(10T)-Einheiten;
- teilkristallines ternäres Polyamid 6T/10T/6I mit 50 bis 90 Mol-%, vorzugsweise 50-70 Mol-% Hexamethylenterephthalamid- (6T) und 5 bis 45 Mol-%, vorzugsweise 10-30 Mol-% Hexamethylenisophthalamid-Einheiten (6I) und 5 bis 45 Mol-%, vorzugsweise 20-40 Mol-% Decamethylenterephthalamid-(10T)-Einheiten;

Titandioxid (Komponente (B))

Die erfindungsgemässe Polyamidformmasse enthält 10 bis 30 Gew.-%, bevorzugt 15 bis 25 Gew.-% und ganz besonders bevorzugt 17 - 23 Gew.-% Titandioxid (Komponente B). Das Titandioxid kann entweder der Anatas- oder Rutil-Typ sein, wobei aus Gründen der ausgezeichneten Wärme- und Witterungsstabilität der Rutiltyp bevorzugt wird. Weiterhin ist bevorzugt, dass das Titandioxid oberflächenbehandelt ist. Titandioxid wird als Pigment in eine Vielzahl von Matrixmaterialien eingearbeitet. Um in jedem Fall die unterschiedlichen, spezifischen Anforderungen zu erfüllen, die an die Pigment-Matrix-Kombination hinsichtlich Anwendung und Verarbeitbarkeit gestellt werden, wird der sogenannte Grundkörper, das reine Titandioxid, einem speziellen Nachbehandlungsverfahren zur Modifizierung der Teilchenoberfläche unterzogen. Bevorzugt gelangen anorganische Oberflächenbehandlungsmittel, insbesondere die Kombination aus anorganischen und organischen Oberflächenbehandlungsmittel für die Nachbehandlung von Titandioxid zum Einsatz. Dabei wird das Titandioxid bevorzugt zunächst mit einer anorganischen Schicht ummantelt und nachfolgend mit einem organischen Coating versehen. Bevorzugte anorganische Coatings sind Metalloxide. Durch die Umhüllung der Titandioxid-Primärpartikeln mit Silicium-, Aluminium- und Zirkonverbindungen, bevorzugt sind die jeweiligen Metalloxide, und zusätzlicher organischer Modifizierung werden eine Reihe von anwendungsbezogenen Eigenschaften des Weisspigments verbessert.

Mit der anorganischen Oberflächenbehandlung erhalten die Pigmentteilchen eine Umhüllung aus $Al_2O_3$-, $ZrO_2$- und $SiO_2$-Verbindungen. Diese hat in erster Linie die Aufgabe, den photokatalytischen Abbau des Polymers zu hemmen. Um die Pigmente für die Verarbeitung in verschiedenen Kunststoff Matrices anzupassen, erhalten sie eine zweite Umhüllung aus einem organischen Oberflächenbehandlungsmittel, wie z.B. Carbonsäuren, Polyol, Alkanolamine und Polysiloxane. Durch die Polysiloxanbehandlung wird die polare Oberfläche der anorganischen Pigmentoberfläche in eine weniger stark polare verwandelt. Hierdurch wird die Benetzbarkeit der Pigmentpartikel mit den Polymermolekülen gefördert, was zu einer guten Dispergierbarkeit führt. Auch die Fördereigenschaften des Pigmentes werden positiv beeinflusst und seine Feuchtigkeitsaufnahme verringert.

Eine Methode, die Bildung von Radikalen und ihren Transport in die Polymer-Matrix zu verhindern, ist die komplette Umhüllung jedes Titandioxid-Teilchens mit einer Schicht aus isolierenden Oxiden, z.B. Kieselsaure ($SiO_2$) oder Aluminiumoxid ($Al_2O_3$). Die wichtigste Methode, die zur Stabilisierung von Titandioxid bei einem Optimum an optischen Eigenschaften angewandt wird, ist die Dotierung des aus dem Chloridverfahren gewonnenen Titandioxid-Grundkörpers und der anorganischen Hochleistungs-Nachbehandlung. Die Dotierung des Grundkörpers aus dem Chloridprozess verhindert die Bildung von Elektronen/Loch-Paaren und vermindert so die Anzahl energiereicher Radikale. Die anorganische Hülle derartig modifizierter Titandioxid-Teilchen besteht aus spezieller gefällter Kieselsäure und/oder Aluminiumoxid und einer geringen Menge an Fremdelementen. Diese Dotierungsagenzien in der Hülle reagieren mit in geringem Masse vorhandenen Radikalen und bilden harmlose Produkte. Derart stabilisierte Titandioxide zeichnen sich durch eine hohe Vergrauungsstabilität und höchste Witterungsstabilität aus und werden bezüglich der vorliegenden Erfindung bevorzugt eingesetzt.

Die Form des Titandioxid-Partikel ist nicht besonders eingeschränkt und kann zweckmässigerweise eine schuppenartige, kugelige oder unbestimmte Form annehmen. Der durchschnittliche Teilchendurchmesser der Titandioxid-Partikel beträgt vorzugsweise etwa 0.1 bis 5 $\mu$m, insbesondere 0.2 bis 1 $\mu$m. Die mittlere Massenverteilung $d50_m$ liegt bevorzugt im Bereich von 0.3 bis 0.6 $\mu$m, die mittlere Anzahlverteilung $d50_n$ liegt bevorzugt im Bereich von 0.1 bis 0.4 $\mu$m. Zur Verbesserung der Dispergierbarkeit des Titandioxids in der Polyamidmatrix können Silikonöle, Polyole oder andere Hilfsmittel verwendet werden.

Beispiele für geeignete Carbonsäuren als organischen Coating sind: Adipinsäure, Terephthalsäure, Laurinsäure, Myristinsäure, Palmitinsäure, Stearinsäure, Polyhydroxystearinsäure, Ölsäure, Salicylsäure, Hydroxybernsteinsäure, Maleinsäure. Der Begriff "Carbonsäure" schliesst Salze, Ester und Amide der genannten Carbonsäuren mit ein.

Als Beispiele für Siliconverbindungen, die für die organische Ummantelung geeignet sind, seien genannt: Silicate, organische Silane und organische Siloxane, einschliesslich Organoalkoxysilane, Aminosilane, Epoxysilane, Mercaptosilane und Polyhydroxysiloxane. Geeignete Silane sind solche mit der Formel $R_xSi(R')_4$, wobei R eine nicht-hydrolysierbare, aliphatische, cycloaliphatische oder aromatische Gruppe mit 1 bis 20 Kohlenstoffatomen, und R' ein oder mehrere hydrolysierbare Gruppen, wie z.B. Alkoxy-, Halogen-, Acetoxy-, oder Hydroxy-Gruppe, und x 1, 2, oder 3 ist.

Besonders bevorzugte Silane schliessen Hexyltrimethoxysilane, Octyltriethoxysilane, Nonyltriethoxysilane, Decyltriethoxysilane, Dodecyltriethoxysilane, Tridecyltriethoxysilane, Tetradecyltriethoxysilane, Pentadecyltriethoxysilane, Hexadecyltriethoxysilane, Heptadecyltriethoxysilane, Octadecyltriethoxysilane, N-(2-Aminoethyl)-3-aminopropylmethyldimethoxysilane, N-(2-Aminoethyl)-3-aminopropyltrimethoxysilane, 3-Aminopropyltriethoxysilane, 3-Glycidoxypropyltrimethoxysilane, 3-Glycidoxypropylmethyldimethoxysilane, 3-Mercaptopropyltrimethoxysilane und Kombination von zwei oder mehreren davon ein. In anderen ebenfalls geeigneten Silanen ist R ein Rest mit 8 bis 18 Kohlenstoffatomen und R' ist eine oder mehrere der folgenden gruppen: Chloro-, Methoxy-, Ethoxy- oder Hydroxy-Gruppe.

Falls vorhanden beträgt der Gewichtsanteil der organischen Ummantelung 0.1 to 10 %, vorzugsweise 0.5 bis 7 % oder ganz besonders bevorzugt 0.5 bis 5 % bezogen auf das beschichtete Titandioxid.

Beispiele für geeignete anorganische Coatings schliessen Metalloxide und Hydroxyoxide der Elemente: Silicium, Aluminum, Zircon, Phosphor, Zink, Seltenerdmetalle und andere ein. Bevorzugte Metalloxide sind Aluminiumoxid und Siliciumdioxid. Das anorganische Coating entspricht in etwa einem Gewichtsanteil von 0.25 bis 50 %, vorzugsweise 1.0 bis 25 % oder ganz besonders bevorzugt 2 bis 20 % bezogen auf das beschichtete Titandioxid.

Glasfaser (Komponente (C))

Kennzeichnend für die beschriebenen Formmassen ist eine moderate Verstärkung durch Glasfasern, wobei die Glasfasern in einem Konzentrationsbereich von 5 bis maximal 20 Gew.-%, bevorzugt zwischen 7 und 17 Gew.-% und ganz besonders bevorzugt zwischen 8 und 15 Gew.-% bezogen auf die gesamte Polyamid-Formmasse eingesetzt werden.

Die Glasfasern bestehen dabei bevorzugt aus E-Glas. Es können aber auch alle anderen Glasfasersorten, wie z.B. A-, C-, D-, M, S-, R-Glasfasern oder beliebige Mischungen davon oder Mischungen mit E-Glasfasern eingesetzt werden. Die Glasfasern können dabei als Endlosfasern oder als geschnittene Glasfasern zugesetzt werden, wobei die Fasern mit einem geeigneten Schlichtesystem und einem Haftvermittler bzw. Haftvermittlersystem, z. B. auf Silanbasis, Aminosilan oder Epoxysilan, ausgerüstet sein können. Bevorzugt wird Schnittglas, sogenannte Kurzglasfasern aus E- oder S-Glas, verwendet.

Geeignete Glasfasern sind sowohl Glasfasern mit kreisförmigem Querschnitt (runde Glasfasern) als auch Glasfasern mit nicht-kreisförmigen Querschnitt (flache Glasfasern). Die runden Glasfasern weisen einen Durchmesser von 5 bis 20 $\mu$m, bevorzugt von 5 bis 15 $\mu$m und besonders bevorzugt von 7 bis 12 $\mu$m auf.

Vorzugsweise können auch Glasfasern mit nicht-kreisförmigen Querschnitt (flache Glasfasern), insbesondere ovale, elliptische, cocoon-artige (zwei oder mehrere runde Glasfasern sind längsseitig miteinander verbunden) oder rechteckige, in den erfindungsgemäßen Formmassen eingesetzt werden. Diese Formmassen zeigen dann Vorteile hinsichtlich der Steifheit und Festigkeit, insbesondere in Querrichtung, bei den aus den Formmassen hergestellten Formteilen. Die vorzugsweise eingesetzten flachen Glasfasern (Komponente (C)) sind Kurzglasfasern (Schnittglas) mit flacher Gestalt und einer nicht kreisförmigen Querschnittfläche, wobei das Verhältnis der senkrecht aufeinander stehenden Querschnittsachsen größer oder gleich 2 ist, und die kleinere Querschnittsachse eine Länge von $\geq 3$ $\mu$m aufweist. Es wird insbesondere eine im Querschnitt möglichst rechteckige Glasfaser bevorzugt. Die Glasfasern liegen in Form von Schnittglas mit einer Länge von 2 bis 50 mm vor. Die Konzentration der flachen Glasfasern in den erfindungsgemäßen Formmassen liegt zwischen 5 und 20 Gew.-%, bevorzugt zwischen 7 und 17 Gew.-%, insbesondere zwischen 8 und 15 Gew.-%.

Wie schon oben dargelegt wurde, werden die flachen Glasfasern (C) erfindungsgemäß als Schnittglas eingesetzt. Diese Glasfasern weisen Durchmesser der kleinen Querschnittsachse von 3 bis 20 $\mu$m und einen Durchmesser der großen Querschnittsachse von 6 bis 40 $\mu$m auf, wobei das Verhältnis der senkrecht aufeinander stehenden Querschnittsachsen (Verhältnis von Haupt- zur Nebenquerschnittsachse) zwischen 2 und 6, bevorzugt zwischen 3 und 5 und ganz besonders bevorzugt bei etwa 4 liegt.

Calciumcarbonat (Komponente (D))

Eine weitere wesentliche Komponente der erfindungsgemässen Polyamidformmassen ist Calciumcarbonat (Komponente D), das in einem Gewichtsanteil von 5 - 30 %, bevorzugt von 10 - 25 % und ganz bevorzugt von 10 bis 20 % in der Formmasse enthalten ist.

Die Komponenten B (Titandioxid), C (Glasfasern) und D (Calciumcarbonat) machen zusammen 20 bis 60 Gew.-% der Polyamidformmasse aus.

Das Gewichtsverhältnis (C):(D) = 0.25 bis 1.5, bevorzugt 0.3 bis 1.2, besonders bevorzugt 0.4 bis 1.0, ganz besonders bevorzugt 0.5.

Geeignete Calciumcarbonat-Minerale sind sowohl gemahlene natürliche Typen als auch gefällte Typen (PCC), die vorzugsweise einen Calciumcarbonat-Gehalt von mindestens 97 Gew.-% und einen $Fe_2O_3$-Gehalt von höchstens 0.2 Gew.-% haben. Nach den in der Natur vorkommenden Formen unterscheidet man zwischen Kreide, Calcit-, Marmor- und Kalksteinmehl. Bevorzugte Kristallstrukturen sind Aragonit und Calcit, wobei nadel-, zigarren- und würfelförmige Kristallformen bevorzugt werden. Insbesondere bevorzugt wird die zigarrenförmige Kristallform, wie sie z.B. die Produkte Socal P2 oder P3 von Solvay Chemicals aufweisen. Beispiele für gemahlene natürliche Kreiden sind: Hydrocarb, Setacarb-OG (ultrafein), Calcigloss-GU (ultrafeines Marmormehl) von Plüss-Staufer AG. Die natürlichen Calciumcarbonat-Füllstoffe stehen in einem Sortiment abgestufter Mahlfeinheiten zur Verfügung. Diese Abstufung reicht von feinstteiligen Produkten mit $d50_m$-Werten von ca. 1 $\mu$m und der oberen Korngrösse von 6 bis 10 $\mu$m bis zu Splittformen im mm-Bereich bei engen Korngrössenverteilungen. Die spezifischen Oberflächen liegen zwischen 1 und 10 $m^2$/g, wobei 10 $m^2$/g nur bei den feinsten Mahlungen erreicht werden. Bei den PCC-Typen weisen die feinen Typen spezifische Oberflächen von 6 - 10 $m^2$/g und die ultrafeinen spezifische Oberflächen von 20 - 35 $m^2$/g auf.

Zur Verbesserung der Dispergierung der Calciumcarbonate in Thermoplasten kann dem Calciumcarbonat durch geeignete Oberflächenbehandlung (Coating) lipophiler Charakter verliehen werden. Geeignete Agenzien zur Oberflächenbehandlung sind z.B. Calciumstearat und Stearinsäure sowie die bereits bei der organischen Oberflächenbehandlung des Titandioxids genannten Carbonsäuren.

LED-Gehäuse/Gehäuse

Der Begriff LED-Anordnung bezeichnet ein Bauteil bestehend aus mindestens einer lichtemittierenden Halbleiter-Diode, ein elektrischer Anschluss zur Verbindung der Diode mit der Stromquelle und das Gehäuse, welches die Diode teilweise umgibt. Optional kann diese LED-Anordnung auch noch eine Linse, welche die LED ganz oder teilweise abdeckt und der Fokussierung des ausgesandten Lichtes dient, beinhalten.

Die eingesetzten Kunststoffe sollten daher eine ausreichende Hitzebeständigkeit aufweisen und das Reflow-Löten ohne Blistering (oberflächliche Blasenbildung) überstehen. Des weiteren sollen die LED-Gehäuse einen möglichst hohen Weissgrad und eine gute Reflektivität aufweisen, um die maximale Lichtmenge reflektieren zu können, und dies über eine möglichst lange Betriebsdauer. Dies erfordert von den Polymerzusammensetzungen eine hohe UV-Lichtbeständigkeit und Hitzebeständigkeit und eine gute Langzeitbeständigkeit unter Betriebsbedingungen. Die erfindungsgemässen Polyamidformmassen erfülle alle genannten Anforderungen und zeichnen sich insbesondere durch eine sehr gute Langzeitreflektivität aus.

Das Gehäuse dieser LED-Anordnung kann aus einem einzigen Stück oder aus zwei oder mehreren Einzelteilen gefertigt werden. Das gesamte Gehäuse oder mindestens ein Gehäuseteil wird aus der erfindungsgemässen Formmasse gefertigt. Die übrigen Gehäuseteile können dann aus anderen polymeren oder keramischen Werkstoffen hergestellt werden. Die einzelnen Gehäuseteile können mechanisch miteinander verbunden werden oder miteinander verklebt werden oder durch Überspritzen mit einer thermoplastischen Formmasse, wie z.B. der erfinderischen Polyamidformmasse, zu einer Einheit gefügt werden. Gehäuse oder Gehäuseteile werden aus den erfindungsgemässen Formmassen mittels bekannter thermoplastischer Formgebungsprozesse, wie z.B. das Spritzgiessen, hergestellt. Gehäuse oder Gehäuseteile können auch durch Überspritzen eines metallenen Leitungsrahmens (bevorzugt Kupfer oder versilbertes Kupfer), der die elektrische Verbindung zur LED im Gehäuse herstellt, mit der Polyamidformmasse hergestellt werden.

Die Gehäuse weisen vorzugsweise eine Vertiefung (Kavität) in einem definierten Bereich auf, in den die LED eingesetzt wird, und welche als Reflektor für das von der LED abgestrahlte Licht in Richtung der vorgesehenen Austrittsöffnung oder der montierten Linse dient. Die Vertiefung hat eine zylindrische, konische, parabolische oder beliebig gekrümmte Form und hat vorzugsweise eine glatte Oberfläche. Die Wände der Vertiefung sind bevorzugt parallel oder im Wesentlichen parallel zur Diode ausgerichtet. Die optionale Linse wird über der LED-Vertiefung angeordnet und besteht z.B. aus einem Epoxid- oder Silicon-Harz oder einem vernetzten transparenten Polyamid.

Die erfindungsgemässen Gehäuse oder Gehäuseteile werden in LED-Anordnungen eingebaut, die z.B. in folgenden Anwendungen zum Einsatz gelangen: Verkehrsampel, Video-Display, Bildschirm, Innen- und Aussenbeleuchtung, Display für Mobiltelefone, Scheinwerfer, Brems- und Rücklichter bei Fahrzeugen, TV-, Computer-, Laptop- oder Notebook-Display-Hintergrundbeleuchtung, Bodenbeleuchtung, z.B. bei Gehwegen, Blitzlicht.

Weitere Ausführungsformen sind in den abhängigen Ansprüchen angegeben.

BESCHREIBUNG BEVORZUGTER AUSFÜHRUNGSFORMEN

In der Folge soll die Erfindung anhand von Ausführungsbeispielen weiter erläutert und gestützt werden. Die nun in der Folge diskutierten Ausführungsbeispiele dienen nur dem Zwecke der Erläuterung und Stützung der Erfindung, sie sollen aber nicht dazu hinzugezogen werden, die Erfindung, wie sie allgemein weiter oben beschrieben wurde, sowie in den Patentansprüchen definiert ist, einschränkend auszulegen.

In den Beispielen werden folgende Ausgangsstoffe zur Herstellung erfindungsgemässer Formmassen eingesetzt:

Komponente (A):

Polymer-1:  Polyamid 6T/6I (70:30) mit einem Schmelzpunkt von 325°C und einer Lösungsviskosität von $\eta_{rel}$ = 1.59 (in m-Kresol, 0.5 Gew.%, 20°C).

Polymer 2:  Polyamid 6T/10T (15:85) mit einem Schmelzpunkt von 295°C und einer Lösungsviskosität von $\eta_{rel}$ = 1.68 (in m-Kresol, 0.5 Gew.%, 20°C).

Komponente (B):

Titandioxid Typ A: Ti-Pure R-104 (DuPont)
Titandioxid Typ B: Kronos 2222 (Kronos Inc.)

Komponente (C):

Glasfaser-1     Vetrotex 995; runde Standard-Glasfaser mit kreisförmigem Querschnitt für Polyamide, Faserlänge 4.5 mm, Durchmesser 10 $\mu$m;

Glasfaser-2 NITTOBO CSG3PA-820, flache Glasfaser, 3 mm lang, Hauptquerschnittsachsen sind ca. 7 und 28 $\mu$m, das Verhältnis der Querschnittsachsen demnach ca. 4, Aminosilanschlichte, NITTO BOSEKI, Japan.

Komponente (D):

Socal P3 (Solvay)

Herstellung der Formmassen und deren Verarbeitung:

Die Ausgangsstoffe wurden in den in den Tabellen 1 und 2 aufgeführten Mengen, die jeweils in Gew.% angegeben sind, mittels eines ZSK25 Zweischnecken-Extruders von Werner&Pfleiderer zu den entsprechenden Formmassen compoundiert. Die Komponenten A, B und D werden über Dosierwaagen in die Einzugszone des Extruders gefördert. Die Glasfasern (Komponente B) und gegebenenfalls ein Teil von Komponente D werden über einen Side-Feeder zugeführt. Die Homogenisierung der Komponenten erfolgte bei Temperaturen von 300-340°C. Die Formmassen wurden als Strang ausgetragen, in einem Wasserbad gekühlt und anschliessend granuliert. Das Granulat wurde auf einen Feuchtegehalt von < 0.05% getrocknet und auf einer Spritzgussmaschine (Zylindertemperatur: 330°C, Formtemperatur: 130°C) zu Prüfkörpern verarbeitet.

Folgende Prüfungen wurden nach folgenden Normen und an folgenden Prüfkörpern durchgeführt.

Zug-E-Modul, Reissfestigkeit und Reissdehnung:

ISO 527 mit einer Zuggeschwindigkeit von 5 mm/min
ISO-Zugstab, Norm: ISO/CD 3167, Typ A1, 170 x 20/10 x 4 mm, Temperatur 23 °C

Thermisches Verhalten: Schmelzpunkt:

ISO-Norm 11357-11-2; Granulat; Die Differential Scanning Calorimetry (DSC) wurde mit Aufheizrate von 20 °C/min durchgeführt.

Relative Viskosität:

DIN EN ISO 307, in 0,5 Gew.-%-iger m-Kresollösung, Temperatur 20 °C Granulat

Langzeitreflektivität:

Die auf einem Flachbettwärmetisch liegenden Farbblättchen (30 x 30 x 2 mm) werden in Luftatmosphäre von unten ganzflächig auf 120°C erwärmt und von oben mittig durch eine LED (15 Watt, $\lambda_{max}$ = 440 nm) über ein fokussierendes Linsensystem (Durchmesser des Kernfokus: 4 mm, Durchmesser des Streulichtkreises: 20 mm) bestrahlt. Die Reflektivität wird nach Oh und nach 24h bei der Wellenlänge von 420 und 440 nm bestimmt.

Die Reflektivität wird nach DIN 6174 an Farbplättchen der Dimension 30 x 30 x 2 mm bei einer Temperatur von 23 °C mit einem Farbmessgerät Datacolor SF600+ mit einer Blende von 30 mm gemessen.

Mechanische Stabilität im Temperaturwechseltest:

Je 100 auf Leadframes gepritzte LED-Gehäuse werden in einem auf 150°C temperierten Ofen (Umluft) für 3 Minuten auf 150°C erwärmt. Dann werden die Proben innerhalb von 3 Sekunden in eine Kühlbox, temperiert auf -60°C, überführt, dort für 3 Minuten gelagert, bevor sie wiederum innerhalb von 3 Sekunden in den auf 150°C temperierten Ofen zurückgebracht werden. Dieser Zyklus wird 50 Mal ausgeführt. Erleiden mehr als ein Prozent der LED-Gehäuse Rissbildung während diesem Temperaturwechseltest, gilt der Test als nicht bestanden. In der Tabellen wird dies durch ein "R" für Rissbildung gekennzeichnet, während "kR" für keine Rissbildung steht.

Diskussion der Resultate:

Die Endeigenschaften der Proben der verschiedenen Beispiele nach der Erfindung 1 - 8 sowie die Vergleichsbeispiele 1 - 8 sind in den Tabellen 1 und 2 zusammengefasst.

Die aus den erfindungsgemässen Formmassen gefertigten Probekörper erreichen durchweg gleich gute Ausgangswerte für die Reflektivität gemessen bei einer Wellenlänge von 420 und 440 nm, wie ihre Vergleichsvarianten.

Nach 24 h Lagerung bei 120°C und gleichzeitiger intensiver Bestrahlung mit einer LED-Lichtquelle fällt die Reflektivität bei den erfindungsgemässen Formmassen deutlich weniger ab, als bei den Vergleichsbeispielen. Insbesondere behalten die Probekörper auf Basis des Polymers Typ 1 ihren hohen Grad an Reflektivität auch nach längerer Wärme- und Strahlungseinwirkung bei und sind demnach bestens geeignet für die Herstellung von LED-Gehäusen oder - gehäuseteilen.

Die LED-Gehäuse aus dem nicht Glasfaser verstärkten Vergleichsbeispiel 2 zeigen zwar eine befriedigende Langzeitreflektivität, sind aber sehr spröde, lassen sich schlecht verarbeiten und haben eine ungenügende mechanische Stabilität, was zum Reissen im Temperaturwechseltest führt.

Die Vergleichsbeispiele 7 und 8 enthalten wie die erfindungsgemässen Beispiele neben Titandioxid auch die Komponenten C (Glasfasern) und D (Calciumcarbonat) aber nicht im erfindungsgemässen Verhältnis von 0.25 bis 1.5. Im Vergleichsbeispiel 7 beträgt das gewichtsbezogene Verhältnis von Glasfasern zu Calciumcarbonat 2.0. Im Vergleich zu Bespiel 1 ist die Langzeitreflektivität deutlich geringer. Im Vergleichsbeispiel 8 beträgt das gewichtsbezogene Verhältnis von Glasfasern zu Calciumcarbonat 0.20. Hier ist die Langzeitreflektivität zwar vergleichbar mit Beispiel 1, aber im Temperaturwechseltest erleiden die mit dieser Formmasse hergestellten LED-Gehäuse bereits nach weniger Zyklen Rissbildung. D.h. die mechanische Stabilität dieser LED-Gehäuse ist ungenügend.

**Tabelle 1:** Zusammensetzung und Eigenschaften der Beispiele 1 bis 8

| Beispiel | 1 | 2 | 3 | 4 | 5 | 6 | 7 | 8 |
|---|---|---|---|---|---|---|---|---|
| **Zusammensetzung in Gew.-%** | | | | | | | | |
| Polymer-1 (HT1) | 58.6 | 48.0 | 48.0 | | | | 48.0 | 48.0 |
| Polymer-2 (HT3) | | | | 58.6 | 53.0 | 48.0 | | |
| Glasfaser 1 (rund) | 10.0 | 10.0 | 10.0 | 15.0 | 15.0 | 15.0 | | |
| Glasfaser 2 (flach) | | | | | | | 10.0 | 15.0 |
| Titandioxid A | 20.0 | 20.0 | | | 20.00 | | | |
| Titandioxid B | | | 20.0 | 20.0 | | 20.0 | 20.0 | 20.0 |
| Calciumcarbonat | 10.0 | 20.0 | 20.0 | 10.0 | 10.0 | 15.0 | 20.0 | 15.0 |
| Stabilisierung / Verarbeitungshilfsstoffe | 1.4 | 2.0 | 2.0 | 1.4 | 2.0 | 2.0 | 2.0 | 2.0 |
| **Eigenschaften** | | | | | | | | |
| Reissfestigkeit [MPa] | 100 | 110 | 95 | 90 | 85 | 90 | 100 | 110 |
| Reissdehnung [%] | 1.8 | 1.6 | 1.9 | 2 | 2 | 1.5 | 2.1 | 2.0 |
| Zug-E-Modul [MPa] | 6500 | 7500 | 7000 | 7500 | 6000 | 8000 | 7500 | 8500 |
| Reflektivität (0h) 420 nm (%) | 87 | 87 | 85 | 87 | 85 | 85 | 87 | 86 |
| Reflektivität (24h) 420nm (%) | 67 | 75 | 80 | 77 | 65 | 66 | 81 | 82 |
| Δ **Reflektivität 420 nm (%)** | **20** | **12** | **5** | **10** | **20** | **19** | **6** | **4** |
| Reflektivität (0h) 440nm (%) | 90 | 90 | 88 | 91 | 88 | 88 | 88 | 90 |
| Reflektivität (24h) 440nm (%) | 68 | 78 | 83 | 80 | 67 | 68 | 82 | 84 |
| Δ **Reflektivität 440 nm (%)** | **22** | **22** | **5** | **11** | **21** | **20** | **6** | **6** |
| Stabilität im Temperaturwechseltest | kR | kR | kR | kR | kR | kR | kR | kR |

Tabelle 2: Zusammensetzung und Eigenschaften der Vergleichsbeispiele 1 bis 8

| Vergleichsbeispiel | 1 | 2 | 3 | 4 | 5 | 6 | 7 | 8 |
|---|---|---|---|---|---|---|---|---|
| **Zusammensetzung in Gew.-%** | | | | | | | | |
| Polymer 1 (HT1) | 58.6 | 58.6 | 58.6 | 58.6 | | | 48.6 | 48.6 |
| Polymer 1 (HT3) | | | | | 58.6 | 58.0 | | |
| Glasfaser | 20.0 | | 20.0 | 20.0 | 20.0 | 20.0 | 20.0 | 5.0 |
| Titandioxid A | 20.0 | | | | 20.0 | | 20.0 | 20.0 |
| Titandioxid B | | 20.0 | | 20.0 | | | | |
| Calciumcarbonat | | 20.0 | 20.0 | | | 20.0 | 10.0 | 25.0 |
| Stabilisierung / Verarbeitungshilfsstoffe | 1.4 | 1.4 | 1.4 | 1.4 | 1.4 | 2.0 | 1.4 | 1.4 |
| **Eigenschaften** | | | | | | | | |
| Reissfestigkeit [MPa] | 120 | 60 | 65 | 120 | 110 | 60 | 100 | 70 |
| Reissdehnung [%] | 1.6 | 1.2 | 1.5 | 1.7 | 1.6 | 1.6 | 1.5 | 1.3 |
| Zug-E-Modul [MPa] | 8500 | 6000 | 5000 | 8500 | 8000 | 4500 | 8600 | 6200 |
| Reilektivität (0h) 420 nm (%) | 88 | 89 | 86 | 85 | 88 | 88 | 87 | 89 |
| Reflektivität (24h) 420nm (%) | 39 | 68 | 60 | 51 | 46 | 60 | 52 | 67 |
| **Δ Reaktivität 420 nm (%)** | **49** | **21** | **26** | **34** | **42** | **28** | **35** | **22** |
| Reflektivität (0h) 440nm (%) | 92 | 90 | 95 | 90 | 91 | 96 | 89 | 91 |
| Reflektivität (24h) 440nm (%) | 41 | 76 | 62 | 54 | 48 | 63 | 52 | 65 |
| **Δ Reflektivität 440 nm (%)** | **51** | **24** | **33** | **36** | **43** | **33** | **37** | **26** |
| Stabilität im Temperaturwechseltes | kR | R | kR | kR | kR | kR | kR | R |

**Patentansprüche**

1. Polyamidformmasse auf Basis von teilkristallinen Polyamiden zur Herstellung von LED-Gehäusen oder Gehäusekomponenten mit hoher Festigkeit, hoher Langzeitreflektivität und geringer Blisterneigung, bestehend aus

   (A) 40 bis 80 Gew.-% mindestens eines teilaromatischen Polyamids auf Basis von wenigstens 70 Mol-% aromatischen Dicarbonsäuren und wenigstens 70 Mol-% aliphatischen Diaminen mit 4 bis 18 Kohlenstoffatomen und mit einer Schmelztemperatur ($T_m$), gemessen nach ISO-Norm 11357-11-2, im Bereich von 270°C bis 340°C
   (B) 10 bis 30 Gew.-% Titandioxidpartikel
   (C) 5 bis 20 Gew.-%, Glasfasern
   (D) 5 - 30 Gew.-% Calciumcarbonat

   wobei die Gewichtsprozente der Komponenten (A) bis (D) zusammen 100% ergeben, und
   mit der Massgabe, dass die Komponenten (B), (C) und (D) die folgenden Bedingungen erfüllen:
   (B) + (C) + (D) = 20 bis 60 Gew.-%,
   Gewichtsverhältnis (C)/(D) im Bereich von 0.25 bis 1.5,
   und wobei die Polyamidformmasse gegebenenfalls zu den Komponenten (A) bis (D) übliche Zusatzstoffe (E) enthalten, und wobei deren Menge additiv zur Summe der Komponenten (A) bis (D) ist.

2. Polyamidformmasse nach Anspruch 1, **dadurch gekennzeichnet, dass** die Komponente (D) durch 10 - 25 Gew.-

%, bevorzugt durch 10 bis 20 Gew.-% Calciumcarbonat gebildet ist.

3. Polyamidformmasse nach einem der vorhergehenden Ansprüche, **dadurch gekennzeichnet, dass** die Komponente (B) durch 15 bis 25 Gew.-% Titandioxidpartikel gebildet ist.

4. Polyamidformmasse nach einem der vorhergehenden Ansprüche, **dadurch gekennzeichnet, dass** die Komponente (B) organisch oder anorganisch beschichtete Titandioxidpartikel gebildet ist.

5. Polyamidformmasse nach einem der vorhergehenden Ansprüche, **dadurch gekennzeichnet, dass** der durchschnittliche Teilchendurchmesser der TitandioxidPartikel 0.1 bis 5 $\mu$m beträgt, insbesondere 0.2 bis 1 $\mu$m und/oder **dadurch gekennzeichnet, dass** die mittlere Massenverteilung $d50_m$ im Bereich von 0.3 bis 0.6 $\mu$m liegt, und/oder **dadurch gekennzeichnet, dass** die mittlere Anzahlverteilung $d50_n$ im Bereich von 0.1 bis 0.4 $\mu$m liegt.

6. Polyamidformmasse nach einem der vorhergehenden Ansprüche, **dadurch gekennzeichnet, dass** das Gewichtsverhältnis (C)/(D) im Bereich von 0.3 bis 1.2 liegt, bevorzugt im Bereich von 0.4 bis 1.0, besonders bevorzugt im Bereich von 0.5.

7. Polyamidformmasse nach einem der vorhergehenden Ansprüche, **dadurch gekennzeichnet, dass** die Komponente (C) durch 7 bis 17, insbesondere durch 8 - 15 Gew.-% Glasfasern gebildet wird, wobei diese eine runde oder nichtkreisförmige Querschnittsfläche aufweisen, oder eine Mischung von derartigen Glasfasern eingesetzt ist, wobei die Querschnittsfläche im Falle von nichtkreisförmiger Querschnittsfläche vorzugsweise oval, elliptisch, rechteckig oder cocoon-förmig ist.

8. Polyamidformmasse nach einem der vorhergehenden Ansprüche, **dadurch gekennzeichnet, dass** das teilaromatische Polyamid der Komponente (A) auf Basis von wenigstens 80 Mol-% aromatischen Dicarbonsäuren und wenigstens 80 Mol-% aliphatischen Diaminen mit 4 bis 18 Kohlenstoffatomen, vorzugsweise mit 6-12 Kohlenstoffatomen, gebildet ist.

9. Polyamidformmasse nach einem der vorhergehenden Ansprüche, **dadurch gekennzeichnet, dass** das teilaromatische Polyamid der Komponente (A) hinsichtlich Dicarbonsäuren im wesentlichen ausschließlich auf Basis von aromatischen Dicarbonsäuren gebildet ist.

10. Polyamidformmasse nach einem der vorhergehenden Ansprüche, **dadurch gekennzeichnet, dass** die genannten aromatischen Dicarbonsäuren des teilaromatischen Polyamids der Komponente (A) ausgewählt sind aus der Gruppe: Terephthalsäure, Isophthalsäure, sowie Mischungen davon.

11. Polyamidformmasse nach einem der vorhergehenden Ansprüche, **dadurch gekennzeichnet, dass** die genannten aliphatischen Diamine des teilaromatischen Polyamids der Komponente (A) ausgewählt sind aus der Gruppe: Hexandiamin, Decandiamin sowie Mischungen davon.

12. Polyamidformmasse nach einem der vorhergehenden Ansprüche, **dadurch gekennzeichnet, dass** das teilaromatische Polyamid der Komponente (A) ausgewählt ist aus der Gruppe: PA 4T/4I, PA 4T/6I, PA 5T/5I, PA 6T/6, PA 6T/6I, PA 6T/10T, PA 6T/10I, PA 9T, PA 10T, PA 12T, PA 10T/10I, PA10T/12, PA10T/11, PA 6T/9T, PA 6T/12T, PA 6T/10T/6I, PA 6T/6I/6, PA 6T/6I/12, sowie Mischungen davon, insbesondere vorzugsweise ist das teilaromatische Polyamid der Komponente (A) ausgewählt aus der Gruppe: PA 6T/6I, PA 6T/10T, PA 6T/10T/6I, sowie Mischungen davon.

13. LED-Gehäuse respektive LED-Gehäusekomponente aus einer Polyamidformmasse nach einem der vorhergehenden Ansprüche.

14. Verwendung einer Polyamidformmasse nach einem der vorhergehenden Ansprüche 1-12 zur Herstellung eines LED-Gehäuses respektive einer LED-Gehäusekomponente.


**Claims**

1. Polyamide moulding material based on semicrystalline polyamides for production of LED housings or housing components with high strength, high long-term reflectivity and low blistering tendency, consisting of

(A) 40 to 80% by weight of at least one semiaromatic polyamide based on at least 70 mol% of aromatic dicarboxylic acids and at least 70 mol% of aliphatic diamines having 4 to 18 carbon atoms and having a melting temperature ($T_m$), measured according to ISO-Norm 11357-11-2, in the range from 270°C to 340°C

(B) 10 to 30% by weight of titanium dioxide particles

(C) 5 to 20% by weight of glass fibres

(D) 5 - 30% by weight of calcium carbonate

where the percentages by weight of components (A) to (D) together add up to 100%, and

with the proviso that components (B), (C) and (D) meet the following conditions:

(B) + (C) + (D) = 20 to 60% by weight,

weight ratio of (C)/(D) in the range from 0.25 to 1.5,

and where the polyamide moulding material optionally comprises customary additives (E) in addition to components (A) to (D), and where the amount thereof is in addition to the sum of components (A) to (D).

2. Polyamide moulding material according to Claim 1, **characterized in that** component (D) is formed by 10 - 25% by weight, preferably by 10 to 20% by weight, of calcium carbonate.

3. Polyamide moulding material according to either of the preceding claims, **characterized in that** component (B) is formed by 15 to 25% by weight of titanium dioxide particles.

4. Polyamide moulding material according to any of the preceding claims, **characterized in that** component (B) is formed by organically or inorganically coated titanium dioxide particles.

5. Polyamide moulding material according to any of the preceding claims, **characterized in that** the average particle diameter of the titanium dioxide particles is 0.1 to 5 $\mu$m, especially 0.2 to 1 $\mu$m, and/or **characterized in that** the median mass distribution $d50_m$ is in the range from 0.3 to 0.6 $\mu$m, and/or **characterized in that** the median number distribution $d50_n$ is in the range from 0.1 to 0.4 $\mu$m.

6. Polyamide moulding material according to any of the preceding claims, **characterized in that** the weight ratio (C)/(D) is in the range from 0.3 to 1.2, preferably in the range from 0.4 to 1.0, more preferably in the region of 0.5.

7. Polyamide moulding material according to any of the preceding claims, **characterized in that** component (C) is formed by 7 to 17%, especially by 8 - 15%, by weight of glass fibres which have a round or noncircular cross-sectional area, or a mixture of such glass fibres is used, said cross-sectional area in the case of a noncircular cross-sectional area being preferably oval, elliptical, rectangular or cocoon-shaped.

8. Polyamide moulding material according to any of the preceding claims, **characterized in that** the semiaromatic polyamide of component (A) is formed on the basis of at least 80 mol% of aromatic dicarboxylic acids and at least 80 mol% of aliphatic diamines having 4 to 18 carbon atoms, preferably having 6-12 carbon atoms.

9. Polyamide moulding material according to any of the preceding claims, **characterized in that** the semiaromatic polyamide of component (A), with regard to dicarboxylic acids, is formed essentially exclusively on the basis of aromatic dicarboxylic acids.

10. Polyamide moulding material according to any of the preceding claims, **characterized in that** said aromatic dicarboxylic acids of the semiaromatic polyamide of component (A) are selected from the group of: terephthalic acid, isophthalic acid and mixtures thereof.

11. Polyamide moulding material according to any of the preceding claims, **characterized in that** said aliphatic diamines of the semiaromatic polyamide of component (A) are selected from the group of: hexanediamine, decanediamine and mixtures thereof.

12. Polyamide moulding material according to any of the preceding claims, **characterized in that** the semiaromatic polyamide of component (A) is selected from the group of: PA 4T/4I, PA 4T/6I, PA 5T/5I, PA 6T/6, PA 6T/6I, PA 6T/10T, PA 6T/10I, PA 9T, PA 10T, PA 12T, PA 10T/10I, PA10T/12, PA10T/11, PA 6T/9T, PA 6T/12T, PA 6T/10T/6I, PA 6T/6I/6, PA 6T/6I/12, and mixtures thereof; the semiaromatic polyamide of component (A) is especially preferably selected from the group of: PA 6T/6I, PA 6T/10T, PA 6T/10T/6I, and mixtures thereof.

**13.** LED housing or LED housing component formed from a polyamide moulding material according to any of the preceding claims.

**14.** Use of a polyamide moulding material according to any of the preceding Claims 1 - 12 for production of an LED housing or of an LED housing component.

**Revendications**

**1.** Masse de moulage en polyamide, à base de polyamides partiellement cristallins, destinée à la fabrication d'enveloppes de LED ou de composants d'enveloppe ayant une résistance mécanique élevée, un pouvoir élevé de réflexion à long terme et une faible tendance, à la formation de cloques, constituée de

(A) 40 à 80 % en poids d'au moins un polyamide partiellement aromatique à base d'au moins 70 % en moles d'acides dicarboxyliques aromatiques et d'au moins 70 % en moles de diamines aliphatiques ayant 4 à 18 atomes de carbone et une température de fusion (Tm), mesurée selon la norme ISO 11357-11-2, comprise entre 270 °C et 340 °C
(B) 10 à 30 % en poids de particules de dioxyde de titane
(C) 5 à 20 % en poids de fibres de verre
(D) 5 à 30 % en poids de carbonate de calcium

la somme des pourcentages en poids des composants (A) à (D) étant égale à 100 %, et
les composants (B), (C) et (D) devant remplir les conditions suivantes :
(B) + (C) + (D) = 20 à 60 % en poids,
le rapport de poids (C)/(D) étant compris entre 0,25 et 1,5,
et ladite masse de moulage en polyamide contenant, outre les composants (A) à (D), le cas échéant des additifs usuels (E), la quantité de ces derniers s'ajoutant à la somme des composants (A) à (D).

**2.** Masse de moulage en polyamide selon la revendication 1, **caractérisée en ce que** le composant (D) est formé par 10 à 25 % en poids, préférentiellement par 10 à 20 % en poids, de carbonate de calcium.

**3.** Masse de moulage en polyamide selon l'une des revendications précédentes, **caractérisée en ce que** le composant (B) est formé par 15 à 25 % en poids de particules de dioxyde de titane.

**4.** Masse de moulage en polyamide selon l'une des revendications précédentes, **caractérisée en ce que** le composant (B) est formé par des particules de dioxyde de titane pourvues d'un revêtement organique ou inorganique.

**5.** Masse de moulage en polyamide selon l'une des revendications précédentes, **caractérisée en ce que** lesdites particules de dioxyde de titane présentent un diamètre de particule dont la moyenne est comprise entre 0,1 et 5 $\mu$m, notamment entre 0,2 et 1 $\mu$m, et/ou **caractérisée en ce que** la valeur moyenne de la répartition en masse $d50_m$ est comprise entre 0,3 et 0,6 $\mu$m, et/ou **caractérisée en ce que** la valeur moyenne de la répartition en nombre $d50_n$ est comprise entre 0,1 et 0,4 $\mu$m.

**6.** Masse de moulage en polyamide selon l'une des revendications précédentes, **caractérisée en ce que** le rapport de poids (C)/(D) est compris entre 0,3 et 1,2, de préférence entre 0,4 et 1,0, et se situe avec une préférence particulière aux alentours de 0,5.

**7.** Masse de moulage en polyamide selon l'une des revendications précédentes, **caractérisée en ce que** le composant (C) est formé par 7 à 17, notamment de 8 à 15 % en poids, de fibres de verre lesquelles présentent une section transversale ronde ou non-circulaire, ou l'on met en oeuvre un mélange desdites fibres, la section transversale présentant, dans le cas d'une section transversale non-circulaire, de préférence une forme ovoïde, elliptique, rectangulaire ou rappelant un cocon.

**8.** Masse de moulage en polyamide selon l'une des revendications précédentes, **caractérisée en ce que** ledit polyamide partiellement aromatique du composant (A) est formé à partir d'au moins 80 % en moles d'acides dicarboxyliques aromatiques et d'au moins 80 % en moles de diamines aliphatiques ayant 4 à 18 atomes de carbone, de préférence 6 à 12 atomes de carbone.

**9.** Masse de moulage en polyamide selon l'une des revendications précédentes, **caractérisée en ce que** ledit polyamide partiellement aromatique du composant (A) est formé, en ce qui concerne les acides dicarboxyliques, sensiblement en exclusivité à partir d'acides dicarboxyliques aromatiques.

**10.** Masse de moulage en polyamide selon l'une des revendications précédentes, **caractérisée en ce que** lesdits acides dicarboxyliques aromatiques du polyamide partiellement aromatique du composant (A) sont choisis dans le groupe : acide téréphtalique, acide isophtalique ainsi que leurs mélanges.

**11.** Masse de moulage en polyamide selon l'une des revendications précédentes, **caractérisée en ce que** lesdites diamines aliphatiques du polyamide partiellement aromatique du composant (A) sont choisies dans le groupé : hexanediamine, décanediamine et leurs mélanges.

**12.** Masse de moulage en polyamide selon l'une des revendications précédentes, **caractérisée en ce que** ledit polyamide partiellement aromatique du composant (A) est choisi dans le groupe : PA 4T/4I, PA 4T/6I, PA 5T/5I, PA 6T/6, PA 6T/6I, PA. 6T/10T, PA 6T/10I, PA 9T, PA 10T, PA 12T, PA 10T/10I, PA10T/12, PA10T/11, PA 6T/9T, PA 6T/12T, PA 6T/10T/6I, PA 6T/6I/6, PA 6T/6I/12 ainsi que leurs mélanges, ledit polyamide partiellement aromatique du composant (A) étant choisi, avec une préférence particulière, dans le groupe : PA 6T/6I, PA 6T/10T, PA 6T/10T/6I ainsi que leurs mélanges.

**13.** Enveloppe de LED ou composant d'enveloppe de LED, réalisé(e) en une masse de moulage en polyamide selon l'une des revendications précédentes.

**14.** Utilisation d'une Masse de moulage en polyamide selon l'une des revendications précédentes 1 à 12 pour fabriquer une enveloppe de LED ou un composant d'enveloppe de LED.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006135841 A
- JP 2007271834 A
- EP 1693418 A
- JP 3088846 A
- EP 1466944 A
- DE 19513940 A
- EP 0976774 A
- EP 0129195 A
- EP 0129196 A
- EP 0299444 A
- US 4831106 A
- US 4607073 A
- DE 1495393 A
- US 3454536 A
- DE 69630260 A
- US 3843611 A
- US 3839296 A